# EUROPEAN PATENT SPECIFICATION

(11) **EP 1 700 630 B1**
(45) Date of publication and mention of the grant of the patent: **25.05.2011**
(21) Application number: 05290520.5
(22) Date of filing: 08.03.2005
(51) Int. Cl.: B01D 53/04

(54) **Process of removal of sulphur compounds from hydrocarbon gas streams using adsorbents**
Verfahren zur Entfernung von Schwefelverbindungen aus gasförmigen Kohlenwasserstoffen mittels Adsorptionsmitteln
Procédé d'elimination de composés sulfururés de flu d'hydrocarbures gazeux au moyens d'adsorbants

(43) Date of publication of application: 13.09.2006
(73) Proprietor: Institut Français du Pétrole, 92852 Rueil Malmaison Cedex (FR); CECA S.A., 92250 La Garenne Colombes (FR)
(72) Inventor: Meyer, Peter, 75020 Paris (FR); Thomas, Michel, 69003 Lyon (FR)

(56) References cited:
- WO-A-2004/039926
- US-A- 3 188 293
- US-A- 4 358 297

## Description

The present invention relates to a process for the removal of sulphur compounds from a hydrocarbon gas stream, comprising said sulphur compounds, which process comprises contacting said gas stream with an adsorbent comprising a zeolitic adsorbent.

The invention further concerns a process for the regeneration of the-said adsorbent loaded with sulphur compounds.

The removal of sulphur-containing compounds from hydrocarbon streams comprising such compounds has always been of considerable importance in the past and is even more so today in view of continuously tightening process requirements and environmental regulations. This holds not only for natural gas streams to be used for e.g. the preparation of synthesis gas or for residential use or to be transported as liquefied natural gas, but also for natural gas liquid streams, natural gas condensate streams as well as for crude oil derived refinery streams containing sulphur compounds.

Sulphur contaminants in hydrocarbon streams include hydrogen sulphide, carbonyl sulphide, mercaptans, sulphides, disulfides, thiophenes and aromatic mercaptans, which due to their odorous nature can be detected at parts per million concentration levels. Thus, it is desirable for users of such natural gas and refinery streams to have concentrations (typical specifications) of total sulphur compounds lowered to e.g. less than 20 or 30 ppmV or less than 50-75 mg S/Nm³, the amount of non-hydrogen sulphide compounds lowered to e. g. less than 5, or even less than 2 ppmV or less than 12 mg S/Nm³ or even less than 5 mg S/Nm³.

Numerous natural gas wells produce what is called "sour gas", e.g. natural gas containing hydrogen sulphide, mercaptans, sulphides and disulphides in concentrations that makes the natural gas unsuitable for direct use. Considerable effort has been spent to find effective and cost-efficient means to remove these undesired compounds. In addition, the natural gas may also contain varying amounts of carbon dioxide, which depending on the use of the natural gas often has to be removed at least partly. Streams used and obtained in refineries, especially hydrogen containing streams obtained in hydrodesulphurisation processes and obtained in hydrocarbon reforming processes as well as obtained by partial oxidation of sulphur containing feed streams, often contain the sulphur compounds as described before.

A number of processes are known for the removal of sulphur compounds and optionally carbon dioxide from hydrocarbon streams. These processes are generally based on physical and/or chemical absorption, chemical reaction and/or solid bed adsorption. Physical and/or chemical absorption processes, often using aqueous alkaline solutions, usually are able to remove hydrogen sulphide and, when carbon dioxide is present, a large amount of the carbon dioxide, in some cases even complete removal of the carbon dioxide is obtained. However, the complete removal of sulphur compounds as mercaptans, sulphides and disulphides is much more difficult.

Chemically reacting processes in general are able to remove carbon dioxide and/or hydrogen sulphide without large difficulties; however, they suffer from the fact that they do not effectively remove mercaptans, sulphides and disulphides and often produce large amounts of useless waste (such as non-regenerable adsorbents). Regenerable solid bed adsorption processes are very suitable for the removal of the larger sulphur compounds such as methyl mercaptan, ethyl mercaptan, normal and isopropyl mercaptan and butyl mercaptan. For instance, WO 2004/039926 discloses such an adsorption process carrying out a regeneration gas stream with a water relative humidity less than 100 % and in which the degradation/ageing of the zeolitic adsorbent is significantly reduced.

However, the regeneration of the adsorption beds is often a considerable problem. During the regeneration of the adsorbent, a considerable amount of regeneration gas is needed and has to be treated by further absorption processes generally using physical and/or chemical solvents such as in e.g. Selexol ® and Purisol® processes representing important investment and being not commercially available everywhere in the world due to export restrictions in order to meet the specifications in terms of sulphur compounds for further use.

The present invention relates to a sulphur compounds removal process that does not show the drawbacks of the prior art processes. Furthermore, in the case of regeneration of adsorbent loaded with these lower alkyl mercaptans, hydrothermal ageing and the formation of carbon on the zeolite adsorbent(s) are particularly low.

The present invention relates to a process for the removal of sulphur compounds from a hydrocarbon gas stream, comprising said sulphur compounds, which process comprises contacting said gas stream with at least an adsorbent comprising a zeolite having a pore diameter of at least 5 Å to adsorb the sulphur compounds thereon and to obtain a treated gas, the adsorption process is followed by a regeneration procedure of used, loaded adsorbent, characterized in that the regeneration procedure comprises the following steps :
a/ contacting the said loaded adsorbent with a first dry gas having a temperature within the range from 15-200 °C and a the pressure of 5-70 bara in a turn-around way by recycling the first dry gas at least partially and preferably completely through the adsorbent, i.e. with or without a purge of gas,
b/ then contacting the loaded adsorbent with a regeneration gas stream having a relative water humidity between 1 and 100 % saturation, a temperature of 15-200 °C and a pressure of 5-70 bara being partially recycled through the adsorbent or not,
c/ and finally contacting the said loaded adsorbent with a second dry gas having a temperature within the range from 50-350 °C and a the pressure of 5-70 bara .

The gas streams in step a) and b) could be recycled with a compressor and could be temperature regulated by heat-exchange.

The contacting of gas in step a) and b) may be performed in the same flow direction as the contacting in the adsorption process.

The temperature of the zeolite adsorption procedure may vary between wide ranges, and is suitably between 0 and 80 °C, preferably between 10 and 60 °C, the pressure is suitably between 10 and 150 bara. The superficial gas velocity is suitably between 0.03 and 0.6 m/s, preferably between 0.05 and 0.4 m/s.

For the regeneration procedure, the regeneration gas stream to be used may be in principle each inert gas or inert gas mixture. Suitably nitrogen, hydrogen or a hydrocarbon gas stream, a mixture of saturated light hydrocarbons, preferably methane, possibly containing inert gases such as N₂, CO₂, Ar can be used, preferably a treated gas stream which is obtained by a sulphur removal process as described above.

In Natural Gas Processing units, the regeneration gas could be e.g. the Sales Gas (product gas) containing generally above 95% vol methane and below 5% ethane and heavier hydrocarbons, or the demethanizer overhead from the gas fractionation part of the Process unit or the residual gas (70% vol methane, 30% vol N2) from the Nitrogen rejection unit in case of LNG production or the boil off gas from LNG storages.

For the first and the third step of the regeneration procedure, the same dry gas can be used.

For the second step of the regeneration procedure, the gas which has a relative water humidity between 1 and 100 % saturation, preferably between 1 and 50 %, may be obtained by any suitable method. For instance, a dry gas may be mixed with a saturated gas, or a dry gas stream is saturated followed by an increase of the temperature. In some preferred embodiments, it can be the gas from the first step which contains some water in the specified range.

The third step of the regeneration procedure according to the present invention is finalized by regeneration with a dry gas stream. In this way the adsorption capacity is fully restored. One advantage of the invention is that the dry gas used for the final regeneration step can be recycled upstream the adsorption unit reducing thus the loss of valuable product as it contains only a very low quantity of sulphur compounds respecting the above mentioned specifications.

In those cases in which the temperature of the regeneration gas is above the condensation point of steam, the relative humidity is defined as the volume percentage of the water in the gas stream.

Very suitably the hydrocarbon gas stream to be treated is a natural gas stream, an associated gas stream, or a refinery gas stream. Natural gas is a general term that is applied to mixtures of inert and light hydrocarbon components that are derived from natural gas wells. The main component of natural gas is methane. Further, often ethane, propane and butane are present. Inert compounds may be present, especially nitrogen, carbon dioxide and, occasionally, helium. When produced together with oil, the natural gas is usually indicated as associated gas.

Sulphur compounds, e.g. hydrogen sulphide, mercaptans, sulphides, disulphides, thiophenes and aromatic mercaptans may be present in natural gas in varying amounts. Refinery streams concern crude oil derived gaseous hydrocarbon streams containing smaller or larger amounts of sulphur compounds. Also recycle streams and bleed streams of hydrotreatment processes, especially hydrodesulphurisation processes, may be treated by the process according to the present invention.

The sulphur compounds which may be removed by the process of the present invention are in principle all compounds which are adsorbed by adsorbents comprising zeolites having a pore diameter of at least 5Å. Usually the sulphur compounds are hydrogen sulphide, carbonyl sulphide, mercaptans, especially C₁-C₆ mercaptans, organic sulphides, especially di-C₁-C₄-alkyl sulphides, organic disulphides, especially di-C₁-C₄-alkyl disulphides, thiophene compounds, aromatic mercaptans, especially phenyl mercaptan, or mixtures thereof, preferably mercaptans, more especially C₁-C₄ mercaptans.

The invention especially relates to the removal of methyl mercaptan, ethyl mercaptan, normal- and iso-propyl mercaptan and the four butyl mercaptan isomers.

The starting hydrocarbon gas stream may contain any amount of sulphur compounds, but in general, the total amount of sulphur compounds will be up to 3 vol % based on total gas stream, is preferably up till 1.5 vol%, more preferably up till 0.1 vol%, still more preferably between 1 and 700 ppmV, most preferably between 2 and 500 ppmV. Higher amounts of sulphur, especially when it concerns mainly hydrogen sulphide, can be removed by the process of the present invention, but are more suitably removed by washing processes in which chemical and/or physical solvents are used.

The starting hydrocarbon gas stream can be a dry hydrocarbon gas stream (preferably having an amount of water ≤ 5 ppmV, and more preferably ≤ 1 ppmV) , may contain a certain amount of water, preferably up to 1 % mol and more preferably less or equal to 2,000 ppm mol. Especially in the case of natural or associated gas the stream will be saturated with water.

In the case that water is present in the hydrocarbon gas stream, a more efficient process is obtained when the water is removed before the removal of the sulphur compounds, preferably by adsorbing the water on a zeolite having a pore diameter of less or equal to 5 Å, preferably a pore diameter of 3 or 4 Å. In such preferred zeolites hardly any sulphur is adsorbed, only water is adsorbed. In general, the capacity of such zeolites is higher than larger pore zeolites. The amount of water to be removed may be small or large, but preferably at least 60 weight % of the water is removed, preferably 90 wt%, Very suitably water is removed to a level of less than 1 % mol in the treated gas, preferably less than 100 ppmV, more preferably less than 5 ppmV.

The process according to the present invention preferably carries out an adsorbent comprising at least a zeolite dispersed in a binder, the zeolite(s) being preferably of a zeolite type A and/or a zeolite of type X. Such materials called also molecular sieves are commercially available.

A further improvement of the process according to the present invention is the use of adsorbent in the form of at least two beds, one bed comprising a zeolite having a pore diameter inferior or equal to 5 Å, preferably 3 or 4 Å, the second and, if present, the further beds comprising a zeolite having a pore diameter of at least 5 Å. It is also possible to have a "complex" bed, being an intimate mixture or a dry-blend of at least two different adsorbents.

In a preferred embodiment, the 1^{st} bed comprises at least a zeolite having the pore diameter of 5 Å that removes hydrogen sulphide, methyl- and ethylmercaptan while the 2^{nd} bed that comprises at least a 13 X zeolite removes all higher mercaptans and larger sulphur compounds. It will be appreciated that the above indicated beds can be applied in one single vessel, or may be spread over two (or even more) vessels.

In another preferred embodiment, there is another bed before the two beds mentioned above comprising at least a 3 Å and/or 4 Å and/or 5 Å zeolite to remove any water upstream of the sulphur compound removal ; the-said further bed may be incorporated into the above mentioned one or more vessels, or may be applied in an additional vessel. The advantage of using more than one vessel is that each vessel can be used at its most optimal conditions for adsorption as well as for regeneration.

The process according to the present invention may be carried out in a continuous mode, preferably using two or more adsorbers comprising zeolite, at least one adsorber in an adsorbing mode and at least one adsorber is a desorbing mode. Depending on the actual situation there may be combinations of two, three, four or even more adsorbers, one in absorbing mode, the others in different stages of desorbing mode.

Especially in the case of natural and associated gas, a considerable amount of the total amount of sulphur compounds is formed by hydrogen sulphide. Amounts of up to 10 or even 20 vol % or even more of hydrogen sulphide may be present. Further smaller or larger amounts of carbon dioxide may be present. Sometimes amounts of up to 10 or even 20 vol % or even more of carbon dioxide may be present. Suitably the gas stream comprises hydrogen sulphide and optionally carbon dioxide up till 2 vol % hydrogen sulphide, more preferably up till 0.5 vol% hydrogen sulphide.

In the case that larger amounts of hydrogen sulphide are present in the gas stream, it appears to be more efficient to remove the hydrogen sulphide (and at least part of the carbon dioxide) by means of a washing process, preferably prior to the adsorption process as defined above.

In a washing process, the gas stream is washed with a chemical and/or physical solvent, preferably an aqueous alkaline solution, more preferably an aqueous amine solution. The use of organic solvents or aqueous solutions of organic solvents for removing of so- called acid gases as hydrogen sulphide and optionally carbon dioxide and/or COS from a gas stream containing these compounds has been described long ago. See for instance A.L. Kohl and F.C. Riesenfeld, 1974, Gas Purification, 2nd edition, Gulf Publishing Co. Houston and R.N. Maddox, 1974, Gas and Liquid Sweetening, Campbell Petroleum Series. Preferably a regenerable absorbent solvent is used in a continuous process.

On an industrial scale there are chiefly two categories of absorbent solvents, depending on the mechanism to absorb the acidic components: chemical solvents and physical solvents. Each solvent has its own advantages and disadvantages as to features as loading capacity, kinetics, regenerability, selectivity, stability, corrosivity, heat/cooling requirements etc.

Chemical solvents which have proved to be industrially useful are primary, secondary and/or tertiary amines derived alkanolamines. The most frequently used amines are derived from ethanolamine, especially monoethanol amine (MEA), diethanolamine (DEA), triethanolamine (TEA), diisopropanolamine (DIPA) and methyldiethanolamine (MDEA).

Physical solvents which have proved to be industrially suitable are cyclotetramethylenesulfone and its derivatives, aliphatic acid amides, N-methylpyrrolidone, N-alkylated pyrrolidones and the corresponding piperidones, methanol, ethanol and mixtures of dialkylethers of polyethylene glycols.

A well-known commercial process uses an aqueous mixture of a chemical solvent, especially DIPA and/or MDEA, and a physical solvent, preferably an alcohol, especially methanol or ethanol, cyclo-tetramethylene sulfone or its derivatives, or N-methyl pyrrolidone, preferably cyclo- tetramethylene sulfone. Such systems show good absorption capacity and good selectivity against moderate investment costs and operational costs.

Such washing processes according to absorption techniques perform very well at high pressures, especially between 20 and 90 bara. Preferably in the hydrogen sulphide removal step at least 90 wt % of the hydrogen sulphide based on total weight of hydrogen sulphide present in the gas stream is removed, preferably 95 wt %, especially hydrogen sulphide is removed till a level of less than 10 ppmV, more especially to a level of less than 5 ppmV.

The adsorption process according to the present invention allows to finish the sulphur compounds removal by concentrating the sulphur compounds in a small quantity of regeneration gas making it possible to mix it directly with the acid gas from the absorption unit for further treatment for sulphur recovery.

Other solutions could be drying and sulphur compounds condensation and then recovery of sulphur compounds in liquid phase.

## Claims

1. A process for the removal of sulphur compounds from a hydrocarbon gas stream, comprising said sulphur compounds, which process comprises contacting said gas stream with at least an adsorbent comprising a zeolite having a pore diameter of at least 5 Å to adsorb the sulphur compounds thereon and to obtain a treated gas, the adsorption process is followed by a regeneration procedure of used, loaded adsorbent, **characterized in that** the regeneration procedure comprises the following steps :
a/ contacting the said loaded adsorbent with a first dry gas having a temperature within the range from 15-200 °C and a pressure of 5-70 bara in a turn-around way by recycling the first dry gas at least partially and preferably completely through the adsorbent,
b/ then contacting the loaded adsorbent with a regeneration gas stream having a relative water humidity between 1 and 100 % saturation, a temperature of 15-200°C and a pressure of 5-70 bara being partially recycled through the adsorbent or not,
c/ and finally contacting the said loaded adsorbent with a second dry gas having a temperature within the range from 50-350 °C and a the pressure of 5-70 bara.

2. A process according to claim 1, in which the contacting of gas in step a) and b) are performed in the same flow direction as the contacting in the adsorption process.

3. A process according to any of claim 1 and 2, in which the hydrocarbon gas stream is natural gas, associated gas, or a refinery gas stream.

4. A process according to any of claim 1 to 3, in which the sulphur compounds are hydrogen sulphide, carbonyl sulphide, mercaptans, especially C₁₋ C₆ mercaptans, organic sulphides, especially di-C₁-C₄-alkyl sulphides, organic disulphides, especially di-C₁-C₄-alkyl disulphides, thiophene compounds, aromatic mercaptans, especially phenyl mercaptan, or mixtures thereof, preferably mercaptans, more especially C₁-C₄ mercaptans, the total amount of sulphur compounds preferably being up to 3 vol% based on total gas stream, more preferably up till 1.5 %Vol, more preferably up till 0.1 %Vol, still more preferably between 1 and 700 ppmV, most preferably between 2 and 500 ppmV.

5. A process according to any of claims 1 to 4, in which the gas stream also comprises water, preferably being removed before the removal of the sulphur compounds, more preferably by adsorbing it on a zeolite having a pore diameter of inferior or equal to 5 Å, even more preferably having a pore diameter of 3 or 4 Å.

6. A process according to any of claims 1 to 5, in which the gas stream also comprises hydrogen sulphide and optionally carbon dioxide, preferably up till 2 vol% hydrogen sulphide, more preferably up till 0.5 vol% hydrogen sulphide, the hydrogen sulphide and part of the carbon dioxide preferably being removed by means of washing the gas stream with a chemical and/or physical solvent, more preferably with an aqueous alkaline solution, even more preferably with an aqueous amine solution.

7. A process according to any of claims 1 to 6, in which the temperature of the zeolite adsorption process is between 10 and 60°C, the pressure is between 10 and 150 bara, and the superficial gas velocity is between 0.03 and 0.6 m/s, preferably between 0.05 and 0.40 m/s.

8. A process according to any of claims 1 to 7, in which the temperature of the first and second steps of the regeneration process is between 100 and 350 °C, and the pressure between 5 and 70 bara.

9. A process according to any one of claims 1 to 8, in which the adsorbent(s) comprises at least a zeolite dispersed in a binder, the zeolite being preferably of zeolite type A and/or zeolite type X.

10. A process according to any of claims 1 to 9, in which the adsorbent is in the form of at least two beds, one bed comprising zeolite having a pore diameter inferior or equal to 5 Å, preferably 3 or 4 Å, such as a 3 A or 4A zeolite, the second and eventually further beds comprising at least a zeolite having a pore diameter of more or equal to 5 Å.

11. A process according to any of claims 1 to 10, in which the regeneration steps are carried out at a superficial gas velocity of less than 0.20 m/s, preferably between 0.02 and 0.15 m/s, the regeneration gas stream(s) preferably being nitrogen, hydrogen or a hydrocarbon gas stream, more preferably a treated gas stream which is obtained by a process according to any of claims 1 to 9.

12. A process according to any of claims 1 to 11, in which the regeneration gas stream for step b) of the regeneration is a gas stream obtained by saturating the stream with water at a temperature below the regeneration temperature.

13. A process according to any of claims 1 to 12, in which the regeneration gas stream for the step b) of the regeneration procedure has a relative humidity between 1 and 50%.

## Patentansprüche

1. Verfahren zum Entfernen von Schwefelverbindungen aus einem Kohlenwasserstoffgasstrom, der die Schwefelverbindungen umfasst, welches Verfahren das Kontaktieren des Gasstroms mit mindestens einem Adsorptionsmittel umfasst, das einen Zeolith umfasst, der einen Porendurchmesser von mindestens 5 Å aufweist, um die Schwefelverbindungen daran zu adsorbieren und ein behandeltes Gas zu erhalten, wobei auf das Adsorptionsverfahren hin ein Regenerierungsverfahren von gebrauchtem, beladenem Adsorptionsmittel erfolgt, **dadurch gekennzeichnet, dass** das Regenerationsverfahren die folgenden Schritte umfasst:
a) das Kontaktieren des beladenen Adsorptionsmittels mit einem ersten trockenen Gas, das eine Temperatur innerhalb des Bereichs von 15 - 200°C und einen Druck von 5 - 70 bara aufweist, durch einen Umkehrvorgang durch Rückführen des ersten trockenen Gases zumindest teilweise und bevorzugt vollständig durch das Adsorptionsmittel,
b) daraufhin das Kontaktieren des beladenen Adsorptionsmittels mit einem Regenerierungsgasstrom, der eine relative Wasserfeuchte zwischen 1 und 100 % Sättigung, eine Temperatur von 15 - 200°C und einen Druck von 5 - 70 bara aufweist und teilweise durch das Adsorptionsmittel rückgeführt wird oder auch nicht,
c) und schließlich das Kontaktieren des beladenen Adsorptionsmittels mit einem zweiten trockenen Gas, das eine Temperatur innerhalb des Bereichs von 50 - 350°C und einen Druck von 5 - 70 bara aufweist.

2. Verfahren nach Anspruch 1, wobei das Kontaktieren von Gas in Schritt a) und b) in derselben Strömungsrichtung wie das Kontaktieren im Adsorptionsverfahren durchgeführt wird.

3. Verfahren nach einem der Ansprüche 1 und 2, wobei der Kohlenwasserstoffgasstrom Erdgas, Erdölgas oder ein Raffineriegasstrom ist.

4. Verfahren nach einem der Ansprüche 1 bis 3, wobei die Schwefelverbindungen Schwefelwasserstoff, Carbonylsulfid, Mercaptane, insbesondere C₁-C₆-Mercaptane, organische Sulfide, insbesondere Di-C₁-C₄-alkylsulfide, organische Disulfide, insbesondere Di-C₁-C₄-alkyldisulfide, Thiophenverbindungen, aromatische Mercaptane, insbesondere Phenylmercaptan oder Mischungen davon, bevorzugt Mercaptane, noch spezifischer C₁-C₄-Mercaptane, sind, wobei die Gesamtmenge an Schwefelverbindungen bevorzugt bis zu 3 Vol.-%, auf den gesamten Gasstrom bezogen, noch bevorzugter bis zu 1,5 Vol.-%, noch bevorzugter bis zu 0,1 Vol.-%, noch bevorzugter 1 bis 700 ppmV, am bevorzugtesten 2 bis 500 ppmV beträgt.

5. Verfahren nach einem der Ansprüche 1 bis 4, wobei der Gasstrom auch Wasser umfasst, das bevorzugt vor der Entfernung der Schwefelverbindungen, noch bevorzugter durch Adsorbieren desselben an einem Zeolith, der einen Porendurchmesser von weniger oder gleich 5 Å aufweist, oder selbst noch bevorzugter einen Porendurchmesser von 3 oder 4 Å aufweist, entfernt wird.

6. Verfahren nach einem der Ansprüche 1 bis 5, wobei der Gasstrom auch Schwefelwasserstoff und wahlweise Kohlendioxid, bevorzugt bis zu 2 Vol.% Schwefelwasserstoff, noch bevorzugter bis zu 0,5 Vol.-% Schwefelwasserstoff umfasst, wobei der Schwefelwasserstoff und ein Teil des Kohlendioxids bevorzugt durch Waschen des Gasstroms mit einem chemischen und/oder physikalischen Lösungsmittel, noch bevorzugter mit einer wässrigen alkalischen Lösung, selbst noch bevorzugter mit einer wässrigen Aminlösung entfernt wird.

7. Verfahren nach einem der Ansprüche 1 bis 6, wobei die Temperatur des Zeolithadsorptionsverfahrens zwischen 10 und 60°C, der Druck zwischen 10 und 150 bara und die Oberflächengasgeschwindigkeit zwischen 0,03 und 0,6 m/s, bevorzugt zwischen 0,05 und 0,40 m/s liegt.

8. Verfahren nach einem der Ansprüche 1 bis 7, wobei die Temperatur der ersten und zweiten Schritte des Regenerierungsverfahrens zwischen 100 und 350 °C und der Druck zwischen 5 und 70 bara liegt.

9. Verfahren nach einem der Ansprüche 1 bis 8, wobei das/die Adsorptionsmittel mindestens einen Zeolith umfasstlumfassen, der in einem Bindemittel dispergiert ist, wobei der Zeolith bevorzugt Zeolith Typ A und/oder Zeolith Typ X ist.

10. Verfahren nach einem der Ansprüche 1 bis 9, wobei das Adsorptionsmittel in Form von mindestens zwei Betten vorliegt, wobei ein Bett Zeolith umfasst, der einen Porendurchmesser von weniger als oder gleich 5 Å, bevorzugt 3 oder 4 Å aufweist, wie beispielsweise Zeolith 3 A oder -4A, wobei das zweite und mögliche weitere Betten mindestens einen Zeolith umfassen, der einen Porendurchmesser von mehr als oder gleich 5 Å aufweist.

11. Verfahren nach einem der Ansprüche 1 bis 10, wobei die Regenerierungsschritte bei einer Oberflächengasgeschwindigkeit von weniger als 0,20 m/s, bevorzugt 0,02 bis 0,15 m/s ausgeführt werden, wobei der/die Regenerierungsgasstrom/-ströme bevorzugt Stickstoff, Wasserstoff oder ein Kohlenwasserstoffgasstrom, noch bevorzugter ein behandelter Gasstrom ist/sind, der durch ein Verfahren nach einem der Ansprüche 1 bis 9 erhalten wird.

12. Verfahren nach einem der Ansprüche 1 bis 11, wobei der Regenerierungsgasstrom für Schritt b) der Regenerierung ein Gasstrom ist, der durch Sättigen des Stroms mit Wasser bei einer Temperatur unterhalb der Regenerierungstemperatur erhalten wird.

13. Verfahren nach einem der Ansprüche 1 bis 12, wobei der Regenerierungsgasstrom für Schritt b) des Regenerierungsvorgangs eine relative Feuchte zwischen 1 und 50 % aufweist.

## Revendications

1. Procédé d'élimination de composés soufrés d'un flux gazeux d'hydrocarbures comprenant lesdits composés soufrés, le procédé comportant la mise en contact dudit flux gazeux avec au moins un adsorbant comportant une zéolite présentant un diamètre de pores d'au moins 5 Å afin d'y adsorber les composés soufrés et d'obtenir un gaz traité, le processus d'adsorption étant suivi d'une procédure de régénération de l'adsorbant chargé usé, **caractérisé en ce que** la procédure de régénération comprend les étapes suivantes :
a) ledit adsorbant chargé est mis en contact avec un premier gaz sec à une température comprise entre 15°C et 200°C et à une pression comprise entre 5 et 70 bars abs, selon un mouvement de rotation, en recyclant le premier gaz sec au moins partiellement et de préférence totalement à travers l'adsorbant,
b) puis l'adsorbant chargé est mis en contact avec un flux gazeux de régénération ayant une humidité relative présentant une saturation comprise entre 1 et 100 %, à une température comprise entre 15°C et 200°C et une pression comprise entre 5 et 70 bars abs, partiellement recyclé à travers l'adsorbant ou non,
c) enfin, ledit adsorbant chargé est mis en contact avec un second gaz sec à une température comprise entre 50°C et 350°C et à une pression comprise entre 5 et 70 bars abs.

2. Procédé selon la revendication 1, dans lequel les mises en contact du gaz aux étapes a) et b) sont effectuées dans le même sens d'écoulement que la mise en contact lors du processus d'adsorption.

3. Procédé selon l'une quelconque des revendications 1 et 2, dans lequel le flux gazeux d'hydrocarbures est un gaz naturel, un gaz associé ou un flux de gaz de raffinerie.

4. Procédé selon l'une quelconque des revendications 1 à 3, dans lequel les composés soufrés sont constitués d'hydrogène sulfuré, d'oxysulfure de carbone, de mercaptans, notamment de mercaptans en C₁-C₆, de sulfures organiques, notamment de sulfures di-C₁-C₄-alkyl, de disulfures organiques, notamment de disulfures di-C₁-C₄-alkyl, de composés du thlophène, de mercaptans aromatiques, notamment de phénylmercaptans, ou de leurs mélanges, de préférence de mercaptans, notamment de mercaptans en C₁-C₄, la quantité totale de composés soufrés s'élevant de préférence à 3 % en volume par rapport au flux gazeux total, de préférence encore à 1,5 % en volume, de manière préférée à 0,1 % en volume, de manière préférée encore comprise entre 1 et 700 ppmV, et de manière très préférée entre 2 et 500 ppmV.

5. Procédé selon l'une quelconque des revendications 1 à 4, dans lequel le flux gazeux comporte également de l'eau qui est de préférence éliminée avant l'élimination des composés soufrés, de préférence encore en l'adsorbant sur une zéolite présentant un diamètre de pores Inférieur ou égal à 5 Å, et de préférence un diamètre de pores de 3 ou 4 Å.

6. Procédé selon l'une quelconque des revendications 1 à 5, dans lequel le flux gazeux comporte également de l'hydrogène sulfuré et éventuellement du dioxyde de carbone, de préférence jusqu'à 2 % en volume d'hydrogène sulfuré, de préférence encore jusqu'à 0.5 % en volume d'hydrogène sulfuré, l'hydrogène sulfuré et une partie du dioxyde de carbone étant de préférence éliminés par lavage du flux gazeux au moyen d'un solvant chimique et/ou physique, de préférence encore au moyen d'une solution alcaline aqueuse, et de manière très préférée au moyen d'une solution aqueuse d'amine.

7. Procédé selon l'une quelconque des revendications 1 à 6, dans lequel la température du processus d'adsorption sur zéolite est comprise entre 10°C et 60°C, la pression est comprise entre 10 et 150 bars abs et la vitesse superficielle du gaz est comprise entre 0,03 et 0,6 m/s, de préférence entre 0,05 et 0,40 m/s.

8. Procédé selon l'une quelconque des revendications 1 à 7, dans lequel la température de la première et de la seconde étape de la procédure de régénération est comprise entre 100°C et 350°C, et la pression est comprise entre 5 et 70 bars abs.

9. Procédé selon l'une quelconque des revendications 1 à 8, dans lequel l'adsorbant (les adsorbants) comporte(nt) au moins une zéolite dispersée dans un liant, la zéolite étant de préférence une zéolite de type A et/ou une zéolite de type X.

10. Procédé selon l'une quelconque des revendications 1 à 9, dans lequel l'adsorbant se présente sous la forme d'au moins deux lits, un lit comportant la zéolite ayant un diamètre de pores inférieur ou égal à 5 Å, de préférence de 3 ou 4 Å, le deuxième et éventuellement les autres lits comportant au moins une zéolite ayant un diamètre de pores supérieur ou égal à 5 Å.

11. Procédé selon l'une quelconque des revendications 1 à 10, dans lequel les étapes de régénération sont réalisées à une vitesse superficielle du gaz inférieure à 0,20 m/s, de préférence comprise entre 0,02 et 0,15 m/s, le(s) flux gazeux de régénération étant de préférence des flux d'azote, d'hydrogène ou d'hydrocarbures, de préférence un flux de gaz traité obtenu avec un procédé selon l'une quelconque des revendications 1 à 9.

12. Procédé selon l'une quelconque des revendications 1 à 11, dans lequel le flux gazeux de régénération de l'étape b) de la procédure de régénération est un flux gazeux obtenu en saturant le flux avec de l'eau à une température inférieure à la température de régénération.

13. Procédé selon l'une quelconque des revendications 1 à 12, dans lequel le flux gazeux de régénération de l'étape b) de la procédure de régénération présente une humidité relative comprise entre 1 et 50 %.
